# EUROPÄISCHE PATENTSCHRIFT

(11) **EP 4 187 191 B1**
(45) Veröffentlichungstag und Bekanntmachung des Hinweises auf die Patenterteilung: **22.05.2024**
(21) Anmeldenummer: 23152118.8
(22) Anmeldetag: 13.10.2016
(51) Int. Cl.: F28F 21/04, F28F 21/02

(54) **VERBUNDPULVER ZUR GENERATIVEN FERTIGUNG, VERFAHREN ZUR HERSTELLUNG EINES VERBUNDPULVERS**
COMPOSITE POWDER FOR ADDITIVE MANUFACTURING, METHOD FOR MANUFACTURING COMPOSITE POWDER
POUDRE COMPOSITE POUR FABRICATION ADDITIVE, PROCÉDÉ DE FABRICATION D'UNE POUDRE COMPOSITE

(43) Veröffentlichungstag der Anmeldung: 31.05.2023
(62) Teilanmeldung aus: 16193638.0
(73) Patentinhaber: Airbus Defence and Space GmbH, 82024 Taufkirchen (DE)
(72) Erfinder: STEINWANDEL, Jürgen, 82024 Taufkirchen (DE); WILHELMI, Christian, 82024 Taufkirchen (DE); PIRINGER, Helmut, 82024 Taufkirchen (DE); WANG, Ning, 82024 Taufkirchen (DE)
(74) Vertreter: Isarpatent

(56) Entgegenhaltungen:
- EP-A1- 0 744 587
- EP-A1- 2 474 514
- EP-A1- 3 009 416
- EP-A1- 3 012 436
- WO-A1-2013/163398
- GB-A- 2 521 913

## Beschreibung

Die vorliegende Erfindung betrifft ein Verbundpulver zur generativen Fertigung hochtemperaturbeständiger Bauteile sowie ein Verfahren zur Herstellung eines Verbundpulvers.

Obwohl auf beliebige Heißgaswärmetauscher anwendbar, werden die vorliegende Erfindung sowie die ihr zugrunde liegende Problematik in Bezug auf Heißgaswärmetauscher für ein Wärmetauschertriebwerk eines Luft- oder Raumfahrzeugs näher erläutert.

Neuartige Ansätze im Bereich des Antriebs für Flugzeuge bestehen darin, elektrische Antriebskomponenten zu verwenden, vergleichbar mit den entsprechenden Entwicklungen im Automobilbereich. Eine hierzu mögliche Antriebsarchitektur ist ein sogenannter serieller Hybrid. Dabei wird die elektrische Energie aus einem Generatorsatz, der mit einer Fluggasturbine und einem elektrischen Generator nebst Leistungselektronik gebildet ist, und zusätzlich aus einer Batterie oder Brennstoffzelle oder Kopplungen derselben bereitgestellt. Die derart bereitgestellte Energie wird über ein elektrisches Verteilernetz auf die elektrisch angetriebenen Propulsoren (Fan, Propeller) gegeben. Hierdurch können insbesondere verteilte Antriebe ohne aufwändige mechanische Alternativen realisiert werden. Ein Gesamtwirkungsgrad dieser hybrid-elektrischen Antriebskette lässt sich wie folgt darstellen: f(ges) = f(Turbine) × f(Generator/Leistungselektronik) × f(Batterie/ Leistungs- elektronik) × f(Verkabelung) × f(Elektromotor Propulsor/ Leistungs- elektronik) × f(Fan/Propeller) f (turbine) ist der sogenannte Joule- Brayton Wirkungsgrad, der für eine moderne große Fluggasturbine bei etwa 40-45% liegt. Im Vergleich dazu kann angenommen werden, dass der Wirkungsgrad resultierend aus den elektrischen Komponenten (lediglich Joul'sche Verluste durch Wärmeentwicklung) deutlich grösser als 90% ist.

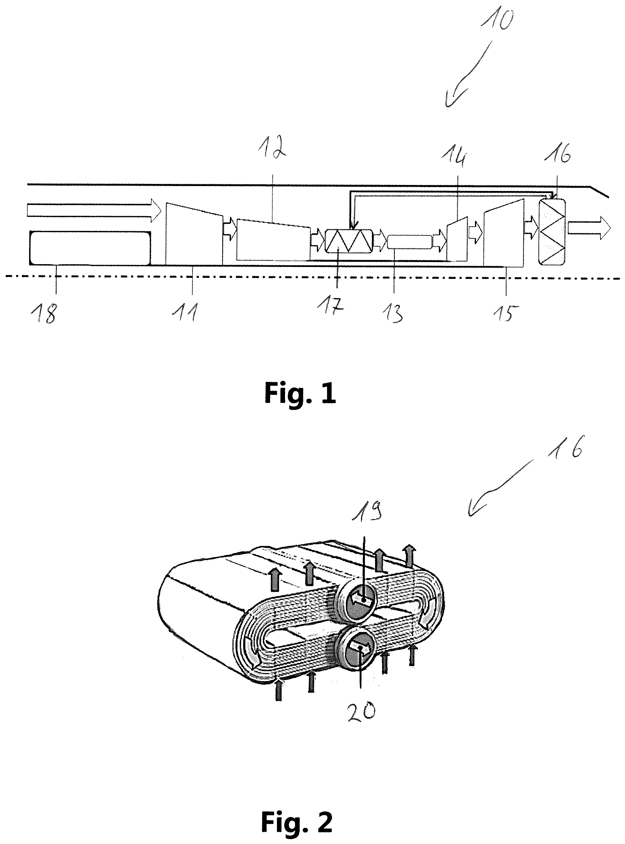

Seitens der Fluggasturbine bestehen mehrere Möglichkeiten den thermodynamischen Wirkungsgrad zu verbessern. Eine Möglichkeit ist der Einsatz sogenannter Wärmetauschertriebwerke, insbesondere mit Heißgasrekuperation nach der Niederdruckturbine, und/oder Kompressor- Zwischenkühlung. Fig. 1 zeigt eine schematische Darstellung eines beispielhaften Wärmetauschertriebwerks in Verbindung mit einem elektrischen Generatorsatz (GenSet) wie es in einem hybrid- elektrischen Antriebsstrang in einem Flugzeug eingesetzt werden kann.

Mit einem derartigen Wärmetauschertriebwerk kann sogenannte HeißgasRekuperation betrieben werden. Dazu wird abgasseitig ein Wärmetauscher, z.B. ein Gegenstromprinzip-Wärmetauscher, eingesetzt. Durch den Wärmetauscher geführte Kühlluft wird hinter dem Hochdruckverdichter als Teilstrom oder Gesamtstrom entnommen und dem Wärmetauscher zugeführt. Nach dem Wärmetausch wird die heiße Luft wird zurückgeführt und nach dem Hochdruckverdichter, d. h. vor der Brennkammer, in den Kreislauf zurückgeführt.

Im Heißbereich einer Fluggasturbine, das heißt nach der Niederdruckturbine, werden bei modernen Triebwerken (z.B. Pratt &Whitney 1100 G Geared Turbofan) Temperaturen bis ca. 900 K (Kelvin) erreicht. Bei anderen Triebwerken können durchaus noch höhere Temperaturen auftreten. Normalerweise bedeutet das im Triebwerksbau die Verwendung von Nickel- bzw. Kobalt-Basislegierungen. Eine mögliche Ni- Legierung ist beispielsweise Inconel 718.

Wärmetauscher für derartige Anwendungen wurden beispielsweise von MTU Aero Engines vorgeschlagen, beispielsweise in "Intercooled Recuperated Gas Turbine Engine Concept", S. Boggia und K. Rüd, AIAA 2005-4192. Aus dieser Referenz stammt auch das in Fig. 2 dargestellte Beispiel eines metallischen Heißgaswärmetauschers, welcher als Gegenstrom- Wärmetauscher ausgebildet ist.

Ferner ist beispielsweise in der EP 2 474 514 A1 ein Verfahren zur Herstellung eines mit Siliciumcarbid beschichteten Kohlenstoffbasismaterials beschrieben, bei dem die Oberfläche eines Kohlenstoffbasismaterials, wie Graphit, mit Siliciumcarbid beschichtet wird, eines mit Siliciumcarbid beschichteten Kohlenstoffbasismaterials, eines gesinterten Siliciumcarbid/Kohlenstoff-Komplexes und eines mit Keramik beschichteten gesinterten Siliciumcarbid/Kohlenstoff-Komplexes.

Es ist nun Aufgabe der vorliegenden Erfindung, einen verbesserten Heißgaswärmetauscher für ein Wärmetauschertriebwerk eines Luft- oder Raumfahrzeugs bereitzustellen

Erfindungsgemäß wird diese Aufgabe durch ein Verbundpulver zur generativen Fertigung hochtemperaturbeständiger Bauteile mit den Merkmalen des Patentanspruchs 1 und/oder ein Verfahren zur Herstellung eines Verbundpulvers mit den Merkmalen des Patentanspruchs 2 gelöst.

Demgemäß ist vorgesehen:
- Ein Verbundpulver zur generativen Fertigung hochtemperaturbeständiger Bauteile, mit: einem Kohlenstoffkern aus Graphene; und einem den Kohlenstoffkern umgebenden Siliziumcarbidmantel, wobei der Siliziumcarbidmantel siliziuminfiltriertes Siliziumcarbid aufweist und mittels Wirbelbeschichtung unter Verwendung gasförmiger Siliziumpräkursoren auf dem Kohlenstoffkern aufgebracht ist.
- Ein Verfahren zur Herstellung eines erfindungsgemäßen Verbundpulvers zur generativen Fertigung hochtemperaturbeständiger Bauteile, mit den folgenden Verfahrensschritten: Bereitstellen eines Kohlenstoffkerns aus Graphene; Aufbringen eines Siliziummantels auf den Kohlenstoffkern, wobei das Aufbringen eines Siliziummantels auf den Kohlenstoffkern mittels Wirbelbeschichtung unter Verwendung gasförmiger Siliziumpräkursoren vorgenommen wird, wobei die Siliziumpräkursoren Silane, organische Präkursoren oder Siliziumtetrachlorid umfassen; Reaktives Sintern des Kohlenstoffkerns mit Siliziummantel unter Ausbildung eines Siliziumcarbidmantels.

Die der vorliegenden Erfindung zugrunde liegende Idee besteht darin, einen für die Bedürfnisse eines Wärmetauschertriebwerks für die Luft- und Raumfahrt geeigneten Heißgaswärmetauscher durch generative Fertigung aus einem Siliziumcarbid enthaltenden Material zu realisieren.

Bevorzugtes Anwendungsgebiet sind Wärmetauschertriebwerke bei Fluggasturbinen. Ausprägungen solcher Fluggasturbinen sind insbesondere Turbofan-Triebwerke im Leistungsbereich > 20 Megawatt.

Ausgangswerkstoff der Methode der generativen Fertigung, auch ALM (additive layer manufacturing) oder additive Fertigung genannt, sind pulverförmige Materialien, die schichtweise zu einem Bauteil verarbeitet werden.

Üblicherweise erfolgt die Verarbeitung im Hochtemperaturprozess mittels cw- Lasern, alternativ dazu auch mittels Elektronenstrahlverfahren. Darüber hinaus existiert die Methode des thermischen Spritzens, beispielsweise mittels Plasma oder Flamme.

Weiterhin ist eine generative Fertigung durch das sogenannte 3D-Drucken unter Einsatz von Binder- bzw. Suspensionsmedien möglich.

Generativ gefertigte Wärmetauscherelemente, insbesondere keramische bzw. Siliziumcarbid enthaltende Wärmetauscherelemente, sind stets schichtweise aufgebaut und so hinsichtlich ihrer Geometrie als Freiformteile bzw. mit nahezu beliebig komplexer Formgebung herstellbar. Sie unterscheiden sich somit von herkömmlichen, in der Regel durch Strangpressen und Verkleben geformten, keramischen Bauteilen zum einen durch ihre mit herkömmlichen keramischen Verfahren nicht herstellbare komplexe Form. Darüber hinaus ist für einen Fachmann mittels werkstofftechnischer Untersuchung, beispielsweise anhand von Schliffbildern, auch nach einem etwaigen Dichtsintern oder Schmelzinfiltrieren, der schichtweise Aufbau der generativen Fertigung erkennbar.

Vorteilhaft ist ein Wärmetauscher aus einem nichtmetallischen Material gebildet. Die Bereitstellung eines solchen Wärmetauschers unter Verwendung von in diesen Temperaturbereichen üblichen Nickel- Basislegierungen und damit dessen vergleichsweise aufwändige und mit hohen Material- und insbesondere Fertigungskosten verbundene Herstellung wird somit vermieden.

Ein weiterer großer Vorteil der Vermeidung derartiger metallischer Werkstoffe ist eine Gewichtsreduzierung, da diese sind mit spezifischen Dichten zwischen 8- 9 g/cm³ vergleichsweise schwer sind. Darüber hinaus ist die thermische Leitfähigkeit vergleichsweise gering (ca. 58 W/mK für Rein-Nickel, ca. 12 W/mK für eine typische Turbinenlegierung wie Inconel 718). Für Siliziumcarbid beträgt das spezifische Gewicht hingegen ca. 3,2 g/cm³ und die Wärmeleitfähigkeit für (gesintertes) Siliziumcarbid ca. 120- 160 W/mK). Insofern weisen erfindungsgemäß eingesetzte Siliziumcarbid enthaltenden Werkstoffe für Heißgaswärmetauscher insgesamt vorteilhafte Eigenschaften auf.

Für die Anwendung des Heißgaswärmetauschers im Luftfahrtbereich ist dieser für dementsprechend hohe Strömungsgeschwindigkeiten ausgelegt. Dies unterscheidet ihn grundlegend von, beispielsweise im Kraftwerksbau eingesetzten klassischen Rohrbündel- und Plattenwärmetauschern. Derartige klassische Anordnungen weisen sehr einfache Geometrien auf, die sich mittels der konventionellen keramischen Technologie ohne große Probleme herstellen lassen. Den Anforderungen im Luftfahrtbereich wird dies aber nicht gerecht. Vorteilhaft wird erfindungsgemäß nun durch generative Fertigung die Darstellung komplexer Bauteile ermöglicht, welche im Luftfahrtbereich bzw. in einem Wärmetauschertriebwerk eines Luft oder Raumfahrzeugs hinsichtlich ihrer Formgebung in geeigneter Weise einsetzbar sind.

Darüber hinaus ist Siliziumcarbid aufgrund seines hohen Schmelzpunktes für Heißgas-Anwendungen im Hochtemperaturbereich über 600 Grad Celsius, insbesondere über 900 Kelvin, vorzugsweise über 1000 Kelvin, geeignet.

Beispielsweise wird ein bisher bei Wärmetauschertriebwerken bestehender großer Kostenfaktor beseitigt, sodass vorteilhaft die Wirtschaftlichkeit von Wärmetauschertriebwerken verbessert wird. Ein erfindungsgemäß somit attraktiverer Einsatz von Wärmetauschertriebwerken ist wünschenswert, da diese eine Möglichkeit zur signifikanten Steigerung des thermodynamischen Wirkungsgrades (Joule-Brayton) darstellen. Damit verbunden ist vorteilhaft eine Reduzierung des spezifischen Kraftstoffbedarfs sowie der Minderung von Schadstoffemissionen. Je nach Flugmission kann die Erhöhung des thermodynamischen Wirkungsgrades beispielsweise bis zu 22% betragen.

Darüber hinaus ermöglichen Wärmetauschertriebwerke neue Möglichkeiten für zukünftige Konzepte eines Luft oder Raumfahrzeugs. Da für die Wärmetauscher und übrigen Komponenten des Wärmetauschertriebwerks zusätzlicher Platz benötigt wird, wird eine Integration des Wärmetauschertriebwerks an oder in den Rumpf eines herkömmlichen Flugzeuges attraktiv. Dies wiederum ermöglicht mehr konzeptionelle Freiheit bei der Anordnung verteilter Propulsoren und dadurch Erhöhung des Bypassverhältnisses und damit gleichzeitige Reduktion der Grenzschichtdicke am Flügel und/oder Rumpf, je nach Anordnung der Propulsoren. Darüber hinaus denkbar wäre somit auch das Vorsehen einer Grenzschichtheizung, ebenfalls zur Reduktion der Grenzschichtdicke, und/oder gegebenenfalls der Einsatz von Laminarflügeln zur Reduktion des induzierten Strömungswiderstands.

Für das erfindungsgemäße Verfahren kommen unterschiedliche generative Fertigungsverfahren in Betracht. Ausgangsmaterial für praktisch alle generativen Fertigungsverfahren sind entsprechend konditionierte Pulvermaterialien.

Erfindungsgemäß enthält ein derartiges Ausgangsmaterial Siliziumcarbid. Aus dem Ausgangsmaterial wird dann generativ ein Wärmetauscherelement-Formkörper, insbesondere als ein sogenanntes Grünteil, hergestellt.

Erfindungsgemäß als Ausgangsmaterial vorgeschlagen wird ein Verbundpulver als hochtemperaturfestes und heissgaskorrosionsstabiles nichtmetallisches Material der Werkstoffklasse Kohlenstoff/Siliziumcarbid (C/SiC). Diese Werkstoffkombination ist insbesondere für Flugzeuganwendungen, wo das Gewicht eine entscheidende Rolle spielt, vorteilhaft. Die hier beschriebene Werkstoffkombination C/SiC beinhaltet spezifisch leichte Materialien, insbesondere im Vergleich zu den normalerweise einzusetzenden metallischen Materialien. Das spezifische Gewicht von Kohlenstoff liegt bei ca. 2,3 g/cm³, was knapp ein Viertel dessen von Nickel- oder Kobalt- Basislegierungen beträgt, bei einer mittleren Wärmeleitfähigkeit von ca.120 - 160 W/mK. Für Siliziumcarbid beträgt das spezifische Gewicht ca. 3,2 g/cm³ und die Wärmeleitfähigkeit für (gesintertes) SiC wie bei Kohlenstoff ca. 120- 160 W/mK. Insofern ist mit diesen Werkstoffen insgesamt eine sehr viel leichtere Konstruktion eines Heißgaswärmetauschers ermöglicht.

Das erfindungsgemäße Verfahren zur Herstellung eines Verbundpulvers zur generativen Fertigung hochtemperaturbeständiger Bauteile verwendet als Kohlenstoffkern beispielsweise eine graphitsche Phase oder andere Kohlenstoff-Konfiguration, wie z. B. Kohlenstoff-Nanotubes, Graphene, oder dergleichen. Ein Reaktives generatives Sintern des Kohlenstoffkerns und des Siliziummantels erfolgt beispielsweise ab 1200 bis 1414°C, dem Schmelzpunkt von Silizium, wobei insbesondere die Reaktion

C+Si → SiC

Abläuft, sodass ein Siliziumcarbidmantel entsteht.

In den Unteransprüchen finden sich vorteilhafte Ausgestaltungen und Verbesserungen der Erfindung.

Gemäß einer Ausführungsform weist das Siliziumcarbid enthaltende Material siliziuminfiltriertes Siliziumcarbid auf. Insbesondere besteht das Wärmetauscherelement komplett aus siliziuminfiltriertem Siliziumcarbid. Auf diese Weise ist ein nach dem generativen Fertigen eines Formteils durch Siliziuminfiltration vergleichsweise einfach herzustellendes, porenfreies, leichtes und gut wärmeleitendes Wärmetauscherelement für den Heißgaswärmetauscher bereitgestellt.

Gemäß einer Ausführungsform weist das Siliziumcarbid enthaltende Material dichtgesintertes Siliziumcarbid auf. Insbesondere besteht das Wärmetauscherelement somit aus einem Siliziumcarbid-Vollmaterial mit lediglich geringer oder ohne Porosität. Dennoch ist erfindungsgemäß mittels generativer Fertigung vorteilhaft eine komplexe Geometrie bzw. Formgebung möglich.

Gemäß einer Ausführungsform weist das Siliziumcarbid enthaltende Material einen Kohlenstoff-Siliziumcarbid-Verbundwerkstoff auf. Ein Kohlenstoff-Siliziumcarbid-Verbundwerkstoff wird auch mit der Abkürzung C/SiC bezeichnet. Insbesondere handelt es sich bei dem Kohlenstoff-Siliziumcarbid-Verbundwerkstoff um mit einem Siliziumcarbidmantel ummantelte Kohlenstoffkerne. Die Kohlenstoffkerne sind mit einer Größe im Pulvermaßstab, insbesondere im Mikrometerbereich, beispielsweise < 100 µm, gebildet. Ein Wärmetauscherelement kann insbesondere aus einem Verbundmaterial mit einem Kohlenstoffkern und einer SiC Ummantelung bestehen. Da das spezifische Gewicht von Kohlenstoff (Graphit) zwischen 2,1 und 2,3 g/cm³ liegt, können je nach Kohlenstoffgehalt des Verbundmaterials vorteilhaft noch leichtere Wärmetauscher realisiert werden als bei SiC-Vollmaterial. Darüber hinaus sind Wärmetauscherelemente aus C/SiC- Material aufgrund der Leitfähigkeit von Kohlenstoff auch mit wesentlich besserer Kapazität beim Wärmetausch darstellbar. Somit können Wärmetauscherelemente und daher der gesamte Heißgaswärmetauscher zusätzlich im Volumen und im Gewicht reduziert werden.

Gemäß einer besonders bevorzugten Ausführungsform weist das Wärmetauscherelement ein strömungsgünstiges äußeres Profil auf. Beispielsweise kann das strömungsgünstige äußere Profil ein elliptisches oder abgeflachtes Profil sein. Denkbar wäre darüber hinaus auch ein Tropfenprofil, laminares Profil, Tragflächenprofil, oder dergleichen. Bei dem Wärmetauscherelement handelt es sich insbesondere um zumindest ein Rohr, ein Rohrgitter, eine dreidimensionale Rohranordnung oder eine Heißgaswärmetauscher-Stufe, wobei zumindest ein Rohr, insbesondere jedes Rohr, des Wärmetauscherelements das strömungsgünstige äußere Profil aufweist. Auf diese Weise ist ein Einsatz des Heißgaswärmetauschers in einem Triebwerk bzw. Wärmetauschertriebwerk, in welchem hohe Strömungsgeschwindigkeiten herrschen, ermöglicht.

Gemäß einer vorteilhaften Ausführungsform des Verfahrens zur Herstellung eines Wärmetauscherelements für einen Heißgaswärmetauscher umfasst das generative Fertigungsverfahren ein Pulverbettverfahren. Insbesondere handelt es sich um ein Pulverbettverfahren, welches mittels Laser- oder Elektronenstrahl betrieben wird. Beispielsweise kann es sich dabei um ein Laser-Sinterverfahren handeln. Dazu schmilzt ein starker Laserstrahl ein pulverförmiges Ausgangsmaterial, welches erfindungsgemäß Siliziumcarbid enthält, exakt an den Stellen auf, welche insbesondere computergenerierten Bauteil-Konstruktionsdaten, beispielsweise CAD/CAM Daten, vorgeben. Danach senkt sich eine Fertigungsplattform, auf welcher der Wärmetauscherelement-Formkörper aufgebaut werden soll, ab. Alternativ oder zusätzlich kann sich auch ein Fertigungskopf heben. Es erfolgt dann ein weiterer Pulverauftrag, wobei erneut Werkstoff aufgeschmolzen wird und sich an den definierten Stellen mit der darunterliegenden Schicht verbindet. Vorteilhaft kann auf diese Weise ohne Fremdmaterialien und trotz der sehr hohen Schmelztemperatur von Siliziumcarbid, welche bei ca. 2730 °C liegt, eine komplexe (Freiform-) Geometrie des Wärmetauscherelements aus Siliziumcarbid hergestellt werden.

Gemäß einer vorteilhaften Ausführungsform wird der Wärmetauscherelement-Formkörper dichtgesintert. Insbesondere erfolgt die Dichtsinterung in einem Verfahrensschritt. Die Sintertemperaturen sollten hierbei ca. 1900 bis 2200 °C betragen. Eine Prozessführung wird dabei im Vakuum oder unter Schutzgasatmosphäre, insbeosndere über mehrere Stunden, vorgesehen. Als Schutzgase kommen Edelgase, wie Argon oder Helium, infrage. Vorteilhaft wird durch die Dichtsinterung eine Restporosität des Formkörpers entfernt.

Gemäß einer bevorzugten Weiterbildung wird der dichtgesinterte Wärmetauscherelement-Formkörper anschließend getempert. Vorteilhaft können auf diese Weise Spannungen im Bauteil abgebaut werden. Beispielsweise erfolgt das Tempern über mehrere Stunden bei Temperaturen von etwa 800 bis 1200 °C, wobei vorher eine Temperaturrampe, beispielsweise von 1 bis 5 °C pro Minute, vorgesehen wird.

Gemäß einer weiteren Ausführungsform wird der Wärmetauscherelement-Formkörper mit Silizium schmelzinfiltriert. Vorteilhaft wird auf diese Weise eine Restporosität des Formkörpers beseitigt. Die Poren werden dabei durch Silizium-Schmelzinfiltration, insbesondere mit elementarem Silizium, aufgefüllt. Somit wird ein Wärmetauscherelement aus siliziuminfiltriertem Siliziumcarbid bereitgestellt.

Gemäß einer weiteren Ausführungsform umfasst das generative Fertigungsverfahrens ein 3D-Druckverfahren. Das Siliziumcarbid enthaltende Ausgangsmaterial in

Pulverform wird dazu aufgeschlämmt bzw. mit einem Bindersystem vermengt. Beispielsweise kann dazu ein flüssiger organischer Binder auf ein Pulverbett gezielt aufgedruckt werden. Alternativ oder zusätzlich kann das Ausgangsmaterial als Suspension aufgeschlämmt und mittels Druckerdüsen direkt zum schichtweisen Aufbau beliebiger Geometrien verwendet werden. Bei einem anschließenden Härten, dem sogenannten Vorsintern, insbesondere in einem Ofen, verfestigt sich das gedruckte Wärmetauscherelement-Formteil und kann anschließend gegebenenfalls von nicht bedrucktem Pulver befreit werden. In einem abschließenden Wärmebehandlungsschritt wird das Wärmetauscherelement-Formteil entbindert, insbesondere durch Verdampfen des Binders, und gesintert. Bei Bedarf kann es anschließend durch Schmelzinfiltration nachverdichtet werden. Alternativ kann es bei dem Sintern auch dichtgesintert werden.

Gemäß einer bevorzugten Ausführungsform enthält der Siliziumcarbid enthaltende Ausgangswerkstoff einen Kohlenstoff-Siliziumcarbid-Verbundwerkstoff in Form eines Verbundpulvers. Ein Korn eines derartigen Kohlenstoff-Siliziumcarbid-Verbundpulvers weist vorzugsweise einen Kohlenstoffkern auf, welcher mit Siliziumcarbid ummantelt ist. Vorteilhaft kann auf diese Weise ein C/SiC Wärmetauscherelement-Formteil hergestellt werden

Gemäß einer bevorzugten Ausführungsform des Verfahrens zum Herstellen eines Verbundpulvers wird das Aufbringen eines Siliziummantels auf den Kohlenstoffkern mittels Wirbelbeschichtung vorgenommen. Dazu werden die Kohlenstoffkerne beispielsweise in einem Wirbelbett mit einem Silizium-Präkursor, das heißt mit Siliziumolekülen als Reaktionsedukt, beaufschlagt. Als Wirbelbett wird insbesondere eine Schüttung von Feststoffpartikeln bezeichnet, welche durch eine aufwärtsgerichtete Strömung eines Fluids in einen fluidisierten Zustand versetzt wird. Vorzugsweise wird die Wirbelbeschichtung unter Verwendung gasförmiger Siliziumpräkursoren vorgenommen. Als Siliziumpräkursoren kommen zum Beispiel Silane oder organische Präkursoren infrage. Bei einer Ausführungsform wird Siliziumtetrachlorid als Präkursor verwendet. Vorteilhaft stellt dies einen besonders kostengünstigen Präkursor dar.

Die obigen Ausgestaltungen und Weiterbildungen lassen sich, sofern sinnvoll, beliebig miteinander kombinieren. Insbesondere sind sämtliche Merkmale und Eigenschaften eines Heißgaswärmetauschers bzw. dessen Wärmetauscherelements auf ein Verfahren zur Herstellung eines Wärmetauscherelements übertragbar, und umgekehrt.

Darüber hinaus kann das Verfahren zur Herstellung eines Verbundpulvers Bestandteil des Verfahrens zur Herstellung des Wärmetauscherelements sein. Insbesondere kann das Verfahren zur Herstellung des Wärmetauscherelements einen Schritt des Bereitstellens eines Siliziumcarbid enthaltenden Ausgangswerkstoffes aufweisen. Dieser Schritt des Bereitstellens kann bei einer Ausführungsform die Bereitstellung des Verbundpulvers und bei einer weiteren Ausführungsform die Herstellung des Verbundpulvers beinhalten.

Bei einer weiteren Ausführungsform kann reines Siliziumcarbid als Ausgangswerkstoff bereitgestellt werden.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Darstellung eines Wärmetauschertriebwerks eines Luftoder Raumfahrzeugs;
- Fig. 2: eine perspektivische Darstellung eines metallischen Heißgaswärmetauschers;
- Fig. 3: eine schematische perspektivische Darstellung von Wärmetauscherelementen eines Heißgaswärmetauschers;
- Fig. 4: eine schematische Darstellung des Profils der Wärmetauscherelemente gemäß Fig. 3;
- Fig. 5: eine schematische Querschnittdarstellung eines Verbundpulverkorns eines Kohlenstoff-Siliziumcarbid-Verbundwerkstoffes.

In den Figuren bezeichnen dieselben Bezugszeichen gleiche oder funktionsgleiche Komponenten, soweit nichts Gegenteiliges angegeben ist.

Fig. 1 zeigt eine schematische Darstellung eines Wärmetauschertriebwerks 10 eines Luft- oder Raumfahrzeugs.

Dieses ist als sogenannter Generatorsatz ausgebildet, in welchem eine Heißgasrekuperation vorgesehen ist, so wie es beispielsweise in einem hybrid-elektrischen Antriebsstrang in einem Flugzeug eingesetzt werden kann.

Das Wärmetauschertriebwerk 10 weist einen Niederdruckverdichter 11 und einen darauf folgenden Hochdruckverdichter 12 auf. Darüber hinaus ist eine Brennkammer 13 vorgesehen, auf welche zunächst eine Hochdruckturbine 14 und anschließend eine Niederdruckturbine 15 folgt. Der Gasstrom durch das Wärmetauschertriebwerk 10 ist in Fig. 1 mit Pfeilen symbolisiert.

Ferner ist ein Generator 18 des Generatorsatzes an der Einlassseite des Wärmetauschertriebwerks 10 dargestellt, welcher insbesondere über eine Welle mit der Turbinenanordnung 14, 15 gekoppelt ist.

An der Abgasseite ist auf die Niederdruckturbine 15 folgend ein Wärmetauscher 16 vorgesehen, welchem entweder über einen Mischer 17 ein Teilstrom, oder ggfs. auch der Gesamtstrom von hinter dem Hochdruckverdichter 12 entnommener Kühlluft zugeführt wird. Nach dem Wärmetauscher wird die dann heiße Luft zu dem Mischer 17 und in den Kreislauf nach dem Hochdruckverdichter und vor der Brennkammer zurückgeführt. Auf diese Weise kann die Energie des Abgasstrahls teilweise für die Brennkammer und die nachfolgende Turbinenanordnung genutzt werden.

Fig. 2 zeigt eine perspektivische Darstellung eines metallischen Heißgaswärmetauschers 16.

Ein derartiger Heißgaswärmetauscher 16 ist als Gegenstrom-Wärmetauscher ausgebildet und aus einer Nickel- bzw. Kobalt- Basislegierung gefertigt.

Der metallische Heißgaswärmetauscher 16 ist zur Rekuperation in Fluggastturbinen ausgebildet. Mit von unten nach oben verlaufenden Pfeilen eingezeichnet ist der Abgasstrom symbolisiert, welcher den Wärmetauscher heizt. Der Wärmetauscher 16 weist einen Kühlluft-Einlass 19 auf, durch welchen die Kühlluft einströmen kann und die Wärmetauscherelemente des Wärmetauschers 16 somit durchströmt. Ferner ist ein Auslass 20 vorgesehen, durch welchen die so erhitzte Luft wieder ausströmt.

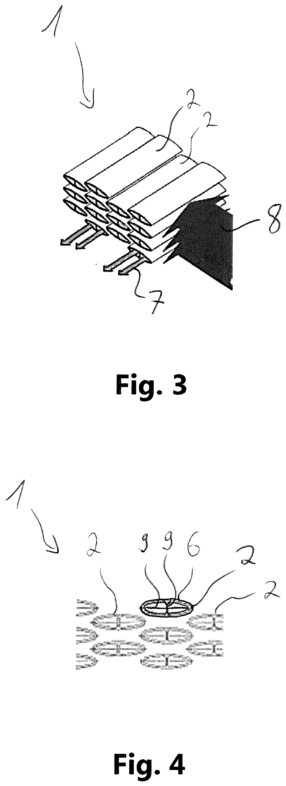

Fig. 3 zeigt eine schematische perspektivische Darstellung von Wärmetauscherelementen 2 eines Heißgaswärmetauschers 1.

Die Wärmetauscherelemente 2 werden in Längsrichtung mit Kühlluft 7 durchströmt, wie mit den kleinen Pfeilen symbolisiert. Ferner werden die Wärmetauscherelemente 2 in Querrichtung von dem mit dicken Pfeilen symbolisierten Abgasstrom 8 umströmt. Auf diese Weise heizt der Abgasstrom 8 die Kühlluft 7 auf, sodass Wärme getauscht wird.

Fig. 4 zeigt eine schematische Darstellung des Profils 6 der Wärmetauscherelemente 2 gemäß Fig. 3.

Die Wärmetauscherelemente 2 sind mit komplexer Geometrie, hier beispielshaft als ein durch innere Stege 9 geteiltes elliptisches Rohr gebildet. Das äußere Profil 6 der Wärmetauscherelemente 2 ist mit einer für den Abgasstrom 8 strömungsgünstigen elliptischen Form gebildet. Auf diese Weise werden Strömungsverluste verringert.

Die Wärmetauscherelemente 2 sind mit einem nachfolgend näher beschriebenen generativen Fertigungsverfahren hergestellt. Ein Ausgangswerkstoff des generativen Fertigungsverfahrens, welcher in Pulverform vorliegt, enthält Siliziumcarbid. Dieses kann entweder in Reinform oder in Form eines Verbundpulvers vorgesehen sein.

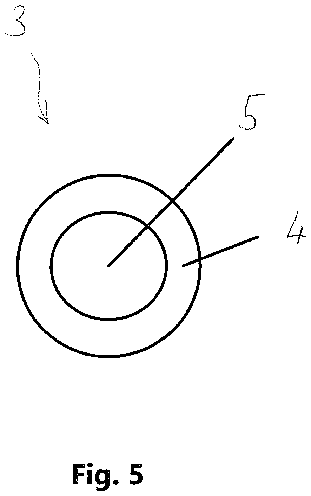

Fig. 5 zeigt eine schematische Querschnittdarstellung eines Verbundpulverkorns eines Kohlenstoff-Siliziumcarbid-Verbundwerkstoffs 3.

Der Kohlenstoff-Siliziumcarbid-Verbundwerkstoff 3 ist hier in Form eines Verbundpulverkorns dargestellt. Dieses repräsentiert die Struktur des Verbundpulvers mit einer Vielzahl derartiger Verbundkörner, welches den Ausgangswerkstoff zur generative Fertigung eines C/SiC-Wärmetauscherelements bildet.

Zur Herstellung eines derartigen Verbundpulvers wird zunächst ein Kohlenstoffkern 5 bereitgestellt oder hergestellt. Dieser kann beispielsweise eine graphitische Phase oder alternativ dazu eine andere Kohlenstoff- Modifikation, wie z.B. gesinterte C- Nanotubes, Graphene oder dergleichen sein. Es kann hier insbesondere die gesamte Substanzklasse des alpha- Kohlenstoffs zur Anwendung kommen.

Auf die Kohlenstoffkerne wird anschließend ein Siliziummantel aufgebracht. Dies wird vorzugsweise mittels einer Wirbelschichtbeschichtung bzw. im Wirbelbett unter Verwendung von gasförmigen Siliziumpräkursoren vorgenommen. Als Siliziumpräkursor kommen beispielsweise Silane oder organische Präkursoren in Frage. Ein möglicher kostengünstiger Präkursor ist insbesondere Siliziumtetrachlorid (SiCl4). Bei dessen Verwendung ist es aus chemisch- thermodynamischer Sicht jedoch vorteilhaft, dem Siliziumtetrachlorid nach Verdampfung Wasserstoff zuzugeben um die ablaufende Reaktion in Richtung der Bildung von Silizium (Si) und Salzsäure (HCl) zu schieben. Auf diese Weise kann die Bildung von elementarem Chlor (C12) vermieden werden.

Die derart erhaltenen siliziumumantelten Kohlenstoffkerne werden dann einem reaktiven generativen Sinterverfahren zugeführt. Dieses wird bei Temperaturen zwischen 1200°C und dem Silizium-Schmelzpunkt von ca. 1414°C durchgeführt, wobei das Silizium mit dem Kohlenstoffkern zu Siliziumcarbid (SiC) reagiert. Die chemische Reaktion lautet:

C + Si <--> SiC

Der Logarithmus der Gleichgewichtskonstanten Kp dieser Reaktion läuft zwischen 12, 4 bei einer Temperatur von 298, 14 K und 1, 5 bei einer Temperatur von 1800 K (berechnet aus "Thermodynamic Data of Pure Substances", I. Barin Vol 1+2 VCH Weinheim (1995)). Der thermodynamische Reaktionsumsatz zu Siliziumcarbid ist dementsprechend vollständig. Die Reaktionsenthalpien, ebenfalls berechnet aus obiger Referenz, liegen zwischen -73,2 Kilojoule pro Mol (kJ/mol) bei 298,14 Kelvin und -78,8 kJ/mol bei 1800 Kelvin. Die Reaktion verläuft daher exotherm.

Auf diese Weise wird mit jedem Korn des so hergestellten Verbundpulvers ein Verbundkorn mit einem Kohlenstoffkern 5 und einem Siliziumcarbidmantel 4 bzw. einer SiC- Umhüllung bereitgestellt.

Zurückkommend auf die Figuren 3 und 4 weist jedes der Wärmetauscherelemente 2 eine derart komplexe Geometrie auf, dass diese aus einem Siliziumcarbid enthaltenden Material, d. h. einer Keramik, mit herkömmlichen keramischen Verfahren nicht oder nur mit sehr hohem Aufwand darstellbar ist. Die Wärmetauscherelemente 2 werden hier mit einem generativen Verfahren hergestellt. Hierzu kommen einerseits sogenannte Pulverbettverfahren unter Einsatz von starken Laserstrahlen oder Elektronenstrahlen und andererseits sogenannte 3D-Druckverfahren in Frage.

Je nach eingesetztem Ausgangsmaterial und zu erreichenden Eigenschaften des Zielwerkstoffs sind unterschiedliche generative Fertigungsarten und Nachbehandlungsarten bevorzugt. Im Folgenden werden derartige bevorzugte Kombinationen dargestellt:
Im Pulverbettverfahren wird bei einer bevorzugten Ausführung reines Siliziumcarbid als Ausgangswerkstoff verwendet. Dieses wird zur Herstellung eines Wärmetauscherelement- Formkörpers mittels Laser-bzw. Elektronenstrahl schichtweise aufgeschmolzen, sodass der Wärmetauscherelement- Formkörper schichtweise aufgebaut wird.

Verfahren zur Herstellung von Formkörpern aus nichtmetallischen Werkstoffen durch schichtweisen Aufbau aus pulverförmigen Materialien mittels generativen Fertigungsverfahren sind dem Fachmann bekannt. Derartige Verfahren werden auch als Laser- bzw. Elektronenstrahl-Sintern bezeichnet. Beispielsweise ist aus der DE 10 2008 021507 A1 ein Verfahren bekannt, wobei zwei keramische Stoffe, die ein eutektisches System bilden können, mit einem Laser aufgeschmolzen und dichtgesintert werden. Entsprechende Fertigungsanlagen sind dem Fachmann bekannt und kommerziell verfügbar.

Die Nachbearbeitung des Wärmetauscherelement- Formkörpers kann je nach Anforderungen an das Wärmetauscherelement in unterschiedlichen Varianten vorgenommen werden.

Eine erste Variante stellt das sogenannte Dichtsintern dar, welches vorzugsweise in einem Verfahrensschritt vorgenommen wird. Der Schmelzpunkt von SiC liegt bei ca. 2.730°C. Eine Dichtsinterung in einem Verfahrensschritt ist daher zwar möglich, die Sintertemperaturen sollten hierbei aber bei ca. 1900 - 2200 °C liegen. Eine Prozessführung im Vakuum oder in Schutzgasatmosphäre, vorzugsweise mit Edelgasen wie Argon oder Helium, ist bevorzugt und dauert in der Regel mehrere Stunden. Der Einsatz von Stickstoff sollte vermieden werden, da ansonsten eine unerwünschte Siliziumnitrid- Bildung möglich ist.

In Anschluss an das Dichtsintern enthält das Bauteil noch Spannungen. Diese können dann mittels Tempern abgebaut werden. Das Tempern wird ebenfalls über mehrere Stunden bei Temperarturen von 800- 1200 °C mit vorheriger Temperaturrampe von ca. 1 bis 5 Kelvin pro Minute (K/min) vorgenommen.

Eine zweite Variante der Nachbearbeitung besteht darin, den Wärmetauscherelement- Formkörper, welcher eine Restporosität enthält, durch Schmelzinfiltration mit Silizium von den Poren zu befreien. Die Poren werden dabei durch Schmelzinfiltration, insbesondere drucklose Infiltration mit schmelzflüssigem elementarem Silizium, aufgefüllt. Somit erhält das Wärmetauscherelement eine Materialzusammensetzung mit siliziuminfiltriertem Siliziumcarbid (SiSiC).

Darüber hinaus stellt für die Verarbeitung des in Bezug auf Fig. 5 beschriebenen Verbundpulvers zur Herstellung eines Wärmetauscherelements 2 in einem generativen Verfahren das 3D- Drucken eine geeignete Verarbeitung dar.

Zum 3D-Druck wird das Verbundpulver als Suspension verarbeitet. Geeignete Suspensionsmedien müssen eine ausreichende Viskosität aufweisen und sollten restfrei verdampfbar sein. Eine hier mögliche Substanzklasse sind Polyalkohole, wie beispielsweise Glykol, Polyethylenglykol oder Glyzerin.

Die Suspension wird mittels Druckerdüsen auf ein Substrat aufgebracht und das Lösemittel abgezogen. Durch schichtweisen Aufbau wird so ein poröses Wärmetauscher-Formteil bzw. ein Grünteil erhalten. Dieses wird in der Folge, wie vorstehend bereits beschrieben, im Ofen dichtgesintert oder nach vorheriger Vorsinterung bei ca. 800- 1200°C mit elementarem Silizium schmelzinfiltriert.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise kann ein Wärmetauscherelement direkt in Form einer Vielzahl von Wärmetauscherrohren oder eines zusammenhängenden Systems von Wärmetauscherrohren oder einer kompletten Heißgaswärmetauscher-Stufe hergestellt oder in einem Heißgaswärmetauscher vorgesehen werden. Insbesondere kann das Wärmetauscherelement eine hohe Komplexität, insbesondere eine andersartige komplexe Form, beispielsweise ein Flügelprofil oder dergleichen, aufweisen.

### Bezugszeichen

- 1: Heißgaswärmetauscher
- 2: Wärmetauscherelement
- 3: Siliziumcarbid-Verbundwerkstoff
- 4: Siliziumcarbidmantel
- 5: Kohlenstoffkern
- 6: äußeres Profil
- 7: Kühlluft
- 8: Abgasstrom
- 9: Steg
- 10: Wärmetauschertriebwerk
- 11: Niederdruckverdichter
- 12: Hochdruckverdichter
- 13: Brennkammer
- 14: Hochdruckturbine
- 15: Niederdruckturbine
- 16: Heißgaswärmetauscher
- 17: Mischer
- 18: Generator
- 19: Kühlluft-Einlass
- 20: Auslass

## Patentansprüche

1. Verbundpulver zur generativen Fertigung hochtemperaturbeständiger Bauteile, mit:
einem Kohlenstoffkern (5) aus Graphene; und
einem den Kohlenstoffkern (5) umgebenden Siliziumcarbidmantel (4), wobei der Siliziumcarbidmantel (4) siliziuminfiltriertes Siliziumcarbid aufweist und mittels Wirbelbeschichtung unter Verwendung gasförmiger Siliziumpräkursoren auf dem Kohlenstoffkern (5) aufgebracht ist, wobei die Siliziumpräkursoren Silane, organische Präkursoren oder Siliziumtetrachlorid umfassen.

2. Verfahren zur Herstellung eines Verbundpulvers zur generativen Fertigung hochtemperaturbeständiger Bauteile gemäß Anspruch 1, mit den folgenden Verfahrensschritten:
Bereitstellen eines Kohlenstoffkerns (5) aus Graphene;
Aufbringen eines Siliziummantels auf den Kohlenstoffkern (5), wobei das Aufbringen eines Siliziummantels auf den Kohlenstoffkern mittels Wirbelbeschichtung unter Verwendung gasförmiger Siliziumpräkursoren vorgenommen wird, wobei die Siliziumpräkursoren Silane, organische Präkursoren oder Siliziumtetrachlorid umfassen;
Reaktives Sintern des Kohlenstoffkerns mit Siliziummantel unter Ausbildung eines Siliziumcarbidmantels (4).

## Claims

1. Composite powder for additive manufacturing of high temperature-resistant components, comprising:
a carbon core (5) composed of graphene; and
a silicon carbide shell (4) surrounding the carbon core (5), wherein the silicon carbide shell (4) comprises silicon-infiltrated silicon carbide and has been applied to the carbon core (5) by fluidized bed coating using gaseous silicon precursors, wherein the silicon precursors comprise silanes, organic precursors or silicon tetrachloride.

2. Process for producing a composite powder for additive manufacturing of high temperature-resistant components according to Claim 1 comprising the process steps of:
providing a carbon core (5) composed of graphene;
applying a silicon shell to the carbon core (5), wherein the applying of a silicon shell to the carbon core is undertaken by fluidized bed coating using gaseous silicon precursors, wherein the silicon precursors comprise silanes, organic precursors or silicon tetrachloride;
reactive sintering of the carbon core with the silicon shell to form a silicon carbide shell (4).

## Revendications

1. Poudre composite destinée à la fabrication additive de pièces résistant aux températures élevées, présentant :
un noyau carboné (5) en graphène ; et
une enveloppe (4) en carbure de silicium entourant le noyau carboné (5), l'enveloppe (4) en carbure de silicium présentant du carbure de silicium infiltré dans du silicium et étant appliquée par revêtement tourbillonnant à l'aide de précurseurs gazeux de silicium sur le noyau carboné (5), les précurseurs de silicium comprenant des silanes, des précurseurs organiques ou du tétrachlorure de silicium.

2. Procédé de fabrication d'une poudre composite destinée à la fabrication additive de pièces résistant aux températures élevées selon la revendication 1, présentant les étapes de procédé suivantes :
mise à disposition d'un noyau carboné (5) en graphène ;
application d'une enveloppe de silicium sur le noyau carboné (5), l'application d'une enveloppe de silicium sur le noyau carboné étant réalisée par revêtement tourbillonnant à l'aide de précurseurs gazeux de silicium, les précurseurs gazeux de silicium comprenant des silanes, des précurseurs organiques ou du tétrachlorure de silicium ;
frittage réactif du noyau carboné présentant l'enveloppe de silicium avec formation d'une enveloppe en carbure de silicium (4).
